Europäisches Patentamt

European Patent Office

Office européen des brevets

(19)

(11) Numéro de publication : **0 365 425 B1**

(12) **FASCICULE DE BREVET EUROPEEN**

(45) Date de publication du fascicule du brevet :
**02.09.92 Bulletin 92/36**

(51) Int. Cl.⁵ : **F02K 1/70**

(21) Numéro de dépôt : **89402876.0**

(22) Date de dépôt : **18.10.89**

(54) **Inverseur de poussée de turboréacteur, à portes pivotantes équilibrées.**

(30) Priorité : **20.10.88 FR 8813766**

(43) Date de publication de la demande :
**25.04.90 Bulletin 90/17**

(45) Mention de la délivrance du brevet :
**02.09.92 Bulletin 92/36**

(84) Etats contractants désignés :
**AT BE CH DE ES FR GB GR IT LI LU NL SE**

(56) Documents cités :
**EP-A- 0 310 497
FR-A- 2 197 115
GB-A- 820 771
US-A- 3 172 256
US-A- 3 605 411**

(73) Titulaire : **HISPANO-SUIZA Société anonyme dite:**
**333, Bureaux de la Colline**
**F-92213 Saint Cloud (FR)**

(72) Inventeur : **Dubois, Claude Achille Germain**
**1, Rue du Parc Gonfreville l'Orcher**
**F-76700 Honfleur (FR)**
Inventeur : **Lore, Xavier Raymond Yves**
**Route de Saint Jean**
**F-76210 Beuzeville la Grenier (FR)**

(74) Mandataire : **Moinat, François et al**
**S.N.E.C.M.A. Service des Brevets Boîte Postale 81**
**F-91003 Evry Cédex (FR)**

## Description

La présente invention concerne un inverseur de poussée de turboréacteur à double flux.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

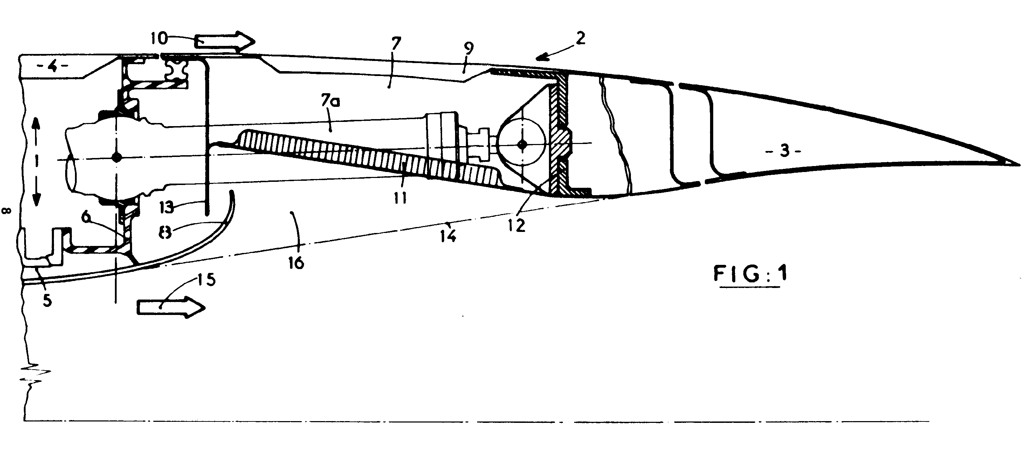

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et un cône arrière fixe 3. Ladite partie fixe amont 1 comprend un panneau externe 4 de nacelle, un panneau externe 5 de veine du flux secondaire et un cadre avant 6 qui assure la jonction desdits panneaux 4 et 5. Ledit cadre avant 6 sert également de support au dispositif de commande des déplacements de la partie mobile 2 qui est essentiellement composée d'un certain nombre d'éléments déplaçables, communément appelés portes 7, ce nombre pouvant varier en fonction des applications particulières, par exemple deux, trois ou quatre portes 7 formant une ensemble annulaire, éventuellement en coopération avec une partie fixe, selon le mode de montage de l'ensemble de propulsion constitué par le turboréacteur sur l'avion.

Chaque porte 7 est associée à un moyen de commande des déplacements tels qu'un vérin 7a.

En aval, amont et aval étant définis par rapport au sens normal de circulation des gaz en poussée directe, la partie fixe 1 se termine par un bord de déviation 8 fixé sous le cadre avant 6 et destiné à assurer une orientation adéquate de l'écoulement, en position d'inversion de poussée. Chaque porte 7 est composée d'un panneau externe 9 venant se placer en position fermée dans le prolongement du panneau externe 4 de la partie fixe amont 1 pour constituer la paroi aérodynamique continue limitant le flux extérieur au moteur représenté par la flèche 10, d'un panneau interne 11 et d'une structure intérieure 12, assurant la liaison entre les panneaux 9 et 11. La porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte 7 un déflecteur frontal 13. Afin que la porte 7, en position ouverte d'inversion de poussée, assure des performances suffisantes, il est habituellement nécessaire, comme dans l'exemple connu représenté à la figure 1, que la partie avant du panneau interne 11 s'écarte, dans une direction radiale extérieure, d'une surface théorique représentée par la ligne 14, correspondant à une enveloppe théorique de délimitation aérodynamique continue parfaite de la veine du flux secondaire des gaz, représenté par la flèche 15. Une cavité 16 se trouve ainsi formée du côté intérieur de la porte 7 lorsqu'elle se trouve en position fermée correspondant à la poussée directe, délimitée, à l'avant, par le déflecteur frontal 13 de porte et par le bord de déviation 8 de la partie fixe amont 1, du côté externe par la partie avant du panneau interne 11 de porte et du côté radialement interne par ladite surface théorique 14. Une partie du flux est forcée par le bord de déviation 8 dans ladite cavité 16, créant ainsi une distorsion du flux et des perturbations dans les écoulements. Il en résulte des pertes aérodynamiques qui sont néfastes au fonctionnement en poussée directe.

D'autre exemples de réalisation du type d'inverseur de poussée de turboréacteur à portes basculantes sont décrits notamment par FR-A-2 486 153, FR-A-2 506 843 et FR-A-2 559 838 ainsi que par FR-A-2 030 034. Aucune solution pleinement satisfaisante n'a toutefois été proposée dans les descriptions citées pour une amélioration du profil de veine correspondant à une enveloppe aérodynamique de veine correcte en fonctionnement de poussée directe.

En outre, US-A-3 605 411 propose un inverseur de poussée à portes basculantes susceptibles de dévier le flux secondaire d'un turboréacteur à double-flux dans lequel chaque porte est associée par des moyens de liaison à une partie interne qui est disposée du côté radialement interne de ladite porte de manière que, en position fermée de la porte correspondant à la position de poussée directe de l'inverseur, le profil de face interne de ladite partie interne suit la ligne théorique de délimitation aérodynamique du profil de la veine de circulation du flux secondaire et, en position ouverte de la porte correspondant à la position d'inversion de poussée de l'inverseur, ladite partie interne est disposée sur la face interne de la porte. Les moyens proposés pour la commande des déplacements de la partie interne mobile de porte, comportant notamment une glissière et un galet de guidage ne sont pas toutefois pleinement satisfaisants et le but de l'invention est d'améliorer ces moyens de commande en modifiant le mode de montage des portes et d'assurer la fiabilité et la sécurité de fonctionnement en facilitant la mise en oeuvre.

Ces buts sont atteints, conformément à l'invention, en ménageant un élément externe de porte susceptible de pivoter autour d'un pivot qui est porté par l'élément interne de porte et en articulant la tige du vérin de manoeuvre de la porte directement sur ledit élément interne. D'autres caractéristiques et avantages de l'invention seront mieux compris à la lecture de la description qui va suivre des modes de réalisation de l'invention, en référence aux dessins annexés sur lesquels :

– la figure 1 représente une demi-vue schématique, en coupe longitudinale par un plan passant par l'axe de rotation d'un turboréacteur, d'un inverseur de poussée à portes pivotantes, en position fermée, d'un type connu et qui a fait précédemment l'objet d'une description ;

– la figure 2 représente, dans une vue analogue à celle de la figure 1, un inverseur de poussée à portes pivotantes, en position fermée, selon un premier mode de réalisation de l'invention :

– la figure 3 montre un détail de réalisation, en vue de dessus et en coupe, des pivots de porte de l'inverseur de poussée représenté sur la figure 2 ;

– la figure 4 montre une vue partielle en coupe suivant la ligne IV-IV des figures 2 et 3 de l'inverseur de poussée montrant le montage de la porte sur la structure fixe d'inverseur ;

– La figure 5 montre une vue partielle en coupe suivant la ligne V-V des figures 2 et 3 de l'inverseur de poussée montrant le montage de l'élément externe de porte sur l'élément interne de porte d'inverseur ;

– La figure 6 représente dans une vue schématique analogue à celles des figures 1 et 2 de l'inverseur de poussée conforme à l'invention mais dans une position d'inversion de poussée et dans une position intermédiaire, montrant la position des portes et éléments mobiles.

– La figure 7 représente, dans une vue analogue à celles des figures 1 et 2, un inverseur de poussée à portes pivotantes, montrées en position fermée, selon un deuxième mode de réalisation de l'invention :

– La figure 8 représente l'inverseur de poussée de la figure 7 selon une vue schématique analogue, mais dans une position d'inversion de poussée, montrant la position des portes et éléments mobiles ;

– La figure 9 représente une vue partielle en perspective d'un inverseur de poussée conforme au deuxième mode de réalisation de l'invention représenté sur les figures 7 et 8 avec l'adjonction d'une variante concernant les déflecteurs frontal et latéraux sur la porte ;

– La figure 10 représente selon une vue analogue à celle de la figure 9 un inverseur de poussée comportant une variante de disposition des déflecteurs latéraux de porte ;

– La figure 11 représente une vue simplifiée analogue à celles des figures 9 et 10 montrant une variante de réalisation des déflecteurs de porte d'inverseur ;

– La figure 12 représente un inverseur de poussée selon une vue analogue à celle des figures 9 et 10 montrant l'adjonction d'un déflecteur aval destiné au réglage des fuites créées entre deux portes voisines.

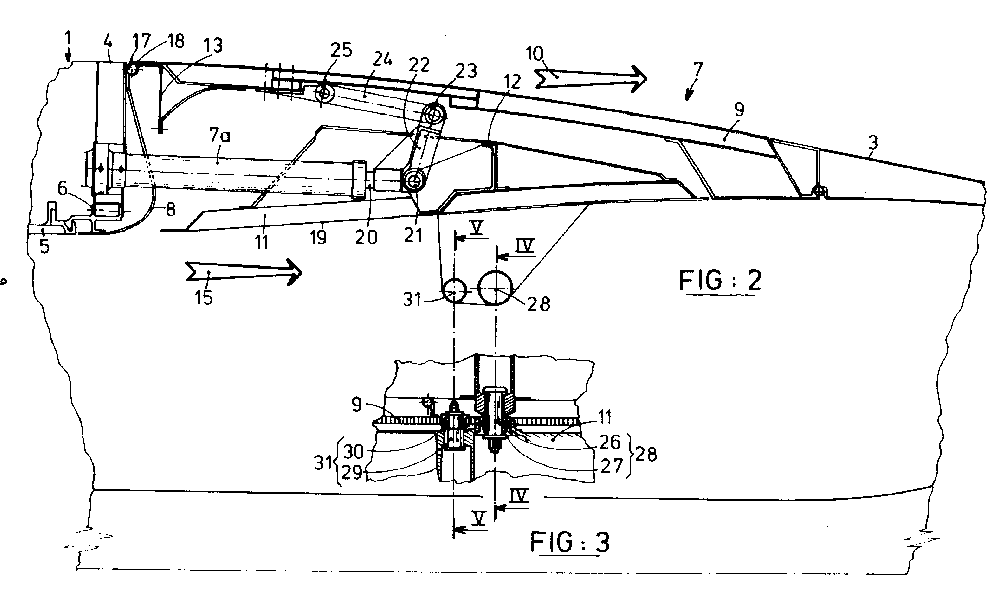

Selon un premier mode de réalisation de l'invention représenté sur la figure 2, un inverseur de poussée susceptible d'effectuer dans les phases de vol pertinentes d'un avion l'inversion du flux secondaire d'un turboréacteur associé à double flux, comporte les ensembles et pièces qui ont été précédemment décrits en référence à la figure 1 dans un exemple connu de réalisation et on conservera les mêmes références de ces éléments lorsqu'ils sont identiques ou correspondants. L'inverseur de poussée comporte ainsi la partie fixe amont 1 composée du panneau externe 4 de nacelle, du panneau externe 5 de veine du flux secondaire représenté par la flèche 15, panneau dont l'extrémité aval est prolongée par le bord de déviation 8 et du cadre avant 6 formant le support du vérin 7a, puis la partie mobile 2 constituée des portes 7, chacune composée d'un élément externe 9 constituant la paroi de délimitation aérodynamique du flux extérieur au moteur représenté par la flèche 10 lorsque la porte 7 est en position fermée, d'un élément interne 11, de la structure intérieure 12 et de l'ensemble des déflecteurs comportant notamment le déflecteur frontal 13 et enfin le cône arrière fixe 3. De manière également connue, l'élément externe 9 de porte coopère sur son pourtour 18 avec un joint 17 qui assure l'étanchéité de la veine fluide entre la partie fixe d'inverseur et la porte 7. Dans la position fermée de la porte 7, correspondant au fonctionnement en poussée directe de l'inverseur de poussée, la surface interne 19 de l'élément interne 11 de porte matérialise la surface théorique 14, représentée à la figure 1 de l'exemple connu et se confond avec l'enveloppe aérodynamique continue théorique de la veine du flux secondaire entre la face interne du panneau 5, en amont, et la face interne du cône arrière fixe 3, en aval.

De manière remarquable, conforme à l'invention, les éléments interne 11 et externe 9 de porte sont séparés et la structure interne 12 de porte est solidaire de l'élément interne 11. L'extrémité de la tige 20 du vérin 7a de manoeuvre de la porte 7 est solidaire d'une articulation 21 d'un type connu à rotule, par exemple, qui est portée par ladite structure interne 12 d'élément interne 11 de porte. La structure interne 12 porte également un élément 22 transmetteur d'effort dont une extrémité est solidaire de l'articulation 21 et dont l'autre extrémité est solidaire d'une articulation 23 d'un type connu par exemple à rotule, qui la relie à l'extrémité d'une bielle 24 dont l'autre extrémité est articulée en 25 sur l'élément externe 9 de porte.

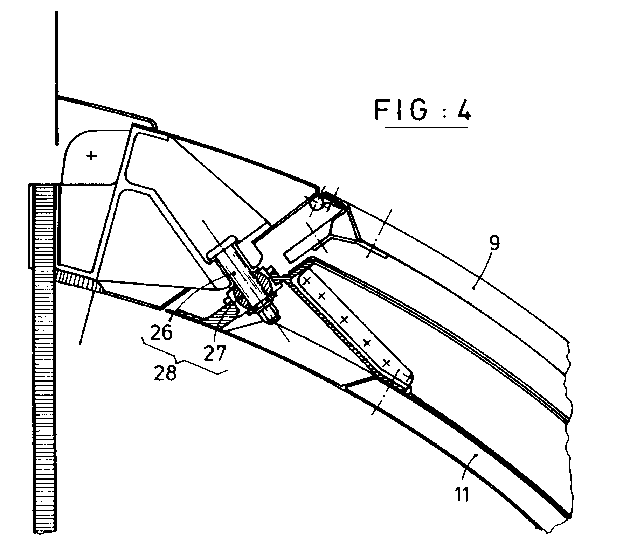

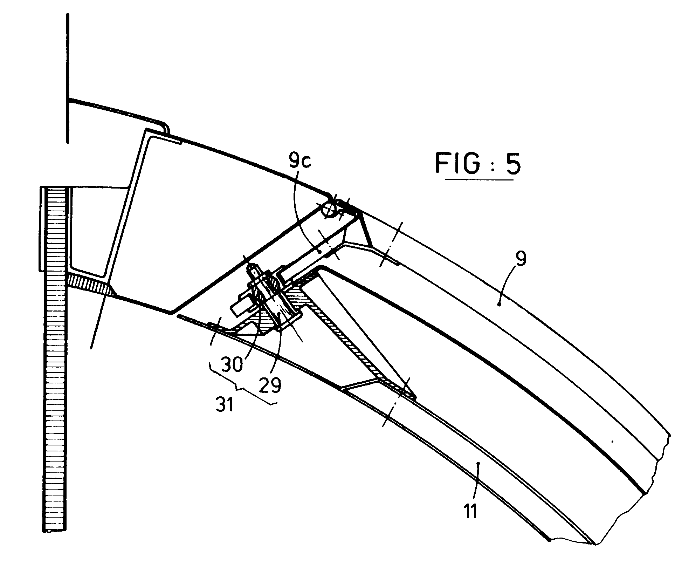

Comme la réalisation en est montrée plus en détails sur les figures 3 et 4, l'élément interne 11 de porte est monté pivotant autour d'un axe d'articulation 26 associé à une rotule 27 formant, de chaque côté de la porte 7, un pivot principal 28 solidaire d'une ferrure de la structure fixe de l'inverseur de poussée. Comme cela est montré plus en détails sur les figures 3 et 5, l'élément interne 11 supporte l'élément externe 9 de porte. De chaque côté de la porte 7, un axe d'articulation 29 associé à une rotule 30 est monté sur ledit élément interne 11 et coopère avec ledit élément externe 9 au moyen d'un support latéral 9c solidaire de l'élément externe 9. L'élément externe 9 est ainsi rendu pivotant par rapport à l'élément interne 11 au moyen du pivot secondaire 31 ainsi constitué.

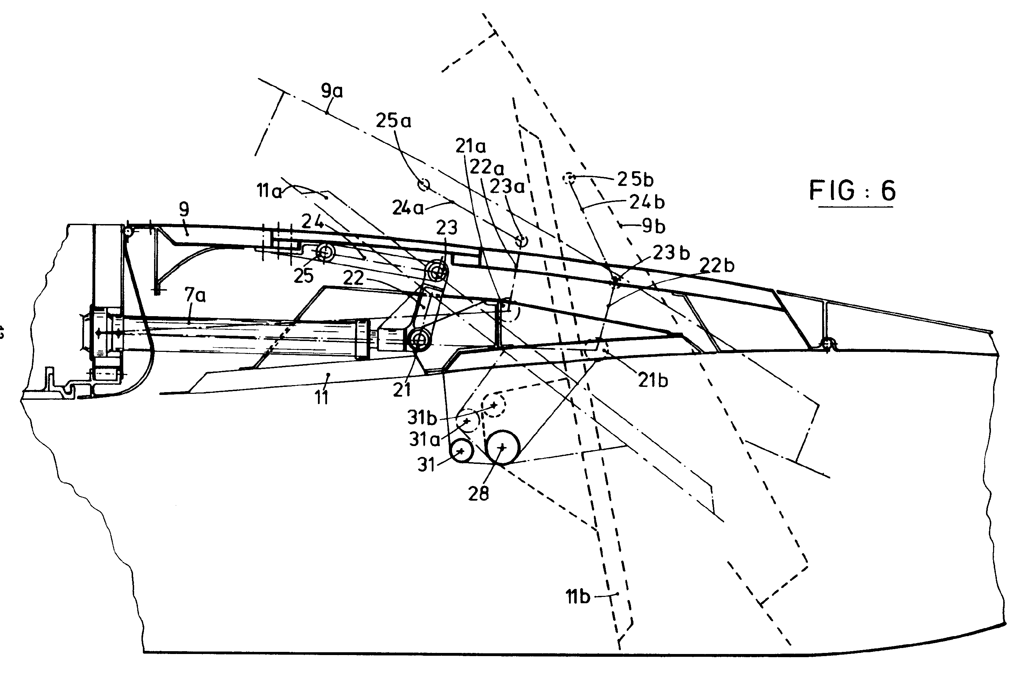

On va donner, en référence à la figure 6 une description sommaire du fonctionnement de l'inverseur de poussée qui a été décrit en référence aux figures 2 à 5. Pour passer de la position fermée de la porte 7 d'inverseur, représentée en traits pleins sur la figure 6 et correspondant à un fonctionnement en poussée directe à une ouverture de la porte 7, représentée sur la figure 6 schématiquement en traits mixtes dans une position intermédiaire et en traits tiretés dans une position de pleine ouverture correspondant à la fermeture du canal secondaire et à une inversion de poussée, le vérin 7a, actionné par un système de commande, d'un type connu en soi et non représenté aux dessins, par déplacement de l'articulation 21 de liaison entre l'extrémité de la tige de vérin et l'élément interne 11 de porte, fait pivoter ledit élément interne 11 de porte autour du pivot principal 28. Dans ce mouvement de pivotement, l'élément interne 11 de porte entraîne, par l'intermédiaire de la bielle 24, l'élément externe 9 de porte qui pivote autour du pivot secondaire 31 porté par l'élément interne 11 de porte. Les éléments interne et externe de porte passent ainsi respectivement aux positions schématisées sur la figure 6, 11a et 9a puis 11b et 9b, tandis que le pivot secondaire 31 prend les positions 31a et 31b et l'articulation 21 du vérin 7a sur l'élément interne 11 de porte prend les positions indiquées 21a et 21b, l'élément 22 transmetteur d'efforts passe en 22a puis 22b, la bielle 24, en 24a puis 24b et les articulations 23 et 25, respectivement en 23a, 25a puis 23b, 25b. Un choix avantageux de la position du pivot principal 28 consiste à le placer d'une manière telle et relativement à la répartition des surfaces de l'ensemble de la porte 7 que la porte est équilibrée, c'est à dire que les poussées du flux s'exerçant sur la porte, d'une part, en amont du pivot 28 et, d'autre part, en aval du pivot 28 s'équilibrent de telle sorte que les efforts demandés aux vérins 7a pour mouvoir les portes 7, soit dans le sens d'ouverture de porte, soit dans le sens de fermeture de porte sont réduits à une valeur minimale, ce qui permet un allègement des vérins et des structures associées de l'inverseur, ces réductions d'encombrement et de masse étant particulièrement avantageuses dans des applications aéronautiques montées sur avion. Cet emplacement avantageux des pivots principaux 28 de porte tient également compte des positions liées des différentes articulations décrites précédemment, 21, 23, 25 et 31.

Dans certaines applications des inverseurs de poussée à portes conformes à l'invention, notamment lorsqu'ils sont montés à proximité de panneaux de dérive de l'avion et, par exemple, dans le cas du moteur de queue sur des avions tri-moteurs, certains inconvénients peuvent être constatés :

   – le flux inversé peut être rejeté par une paroi proche entraînant un risque de réingestion partielle par le moteur ;
   – sous l'influence du flux inversé, des surpressions peuvent apparaître au niveau d'un bord d'attaque de l'avion entraînant une perte de manoeuvrabilité de l'avion en tangage et lacet et un risque de destabilisation de l'avion lors de l'atterrissage.

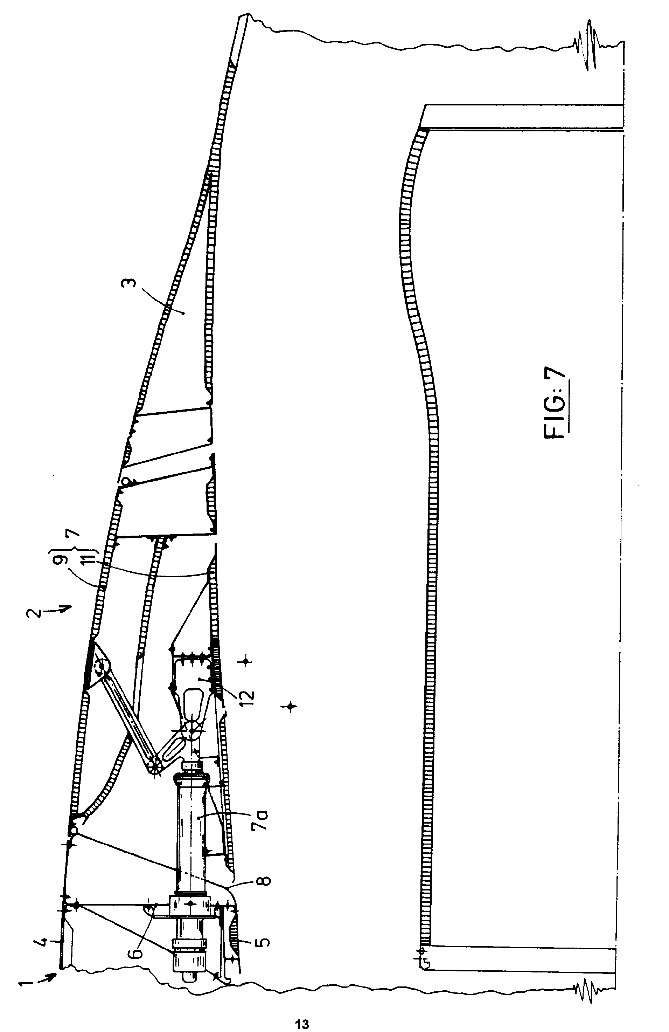

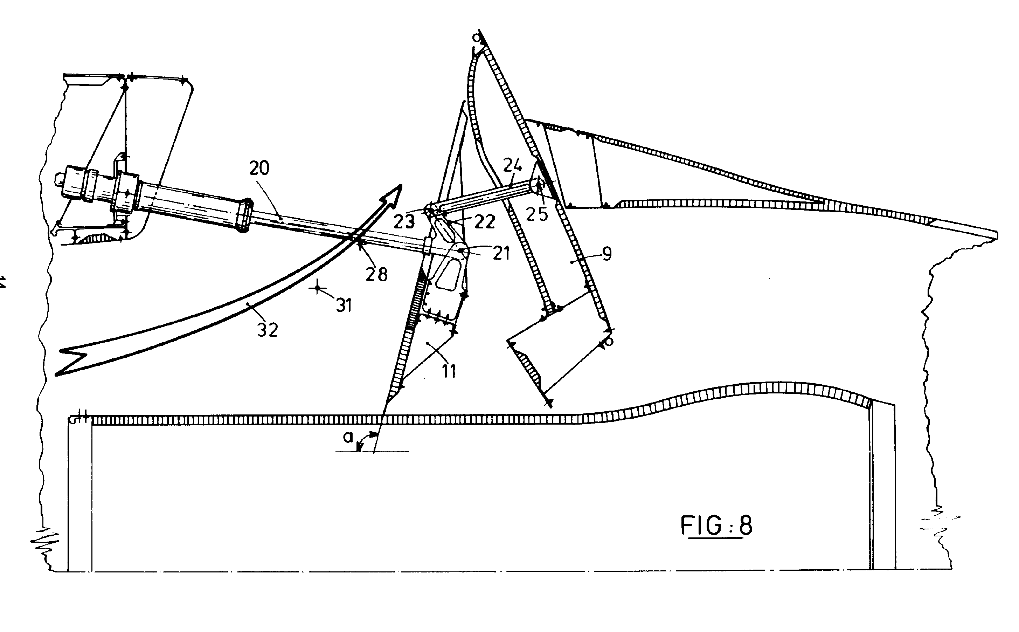

Un second mode de réalisation d'un inverseur de poussée, représenté sur les figures 7 et 8, permet d'adapter l'invention à ces applications en évitant les inconvénients précédemment rencontrés.

Cet inverseur conserve des éléments précédemment décrits qui restent affectés des mêmes références et notamment :

   – une partie fixe amont 1 composée d'un panneau externe 4, d'un panneau interne 5 prolongé par un bord de déviation 8 et d'un cadre avant 6 supportant un vérin 7a,
   – une partie mobile 2, constituée de portes 7 composées d'un élément externe 9 et d'un élément interne 11 comportant une structure intérieure 12
   – et un cône arrière fixe 3.

Comme dans le premier mode, les éléments externe 9 et interne 11 de porte sont séparés et la tige 20 du vérin 7a s'applique sur ledit élément interne 11, sur une articulation 21 portée par la structure 12 et solidaire d'un élément transmetteur d'effort 22 dont l'autre extrémité est solidaire d'une articulation 23 portée par une bielle 24, elle-même articulée en 25 sur l'élément externe 9 de porte. De même, l'élément interne 11 de porte est monté pivotant autour d'un pivot principal fixe 28 tandis que l'élément externe 9 de porte est pivotant autour d'un pivot secondaire 31 porté par l'élément interne 11.

Ce second mode diffère du premier par un choix judicieux coordonné de la longueur du vérin 7a, de la longueur de la bielle 24 et de la position de l'élément transmetteur 22 de manière à obtenir, comme schématisé sur la figure 8, en position déployée de l'inverseur, à portes 7 ouvertes, une position de l'élément interne 11 de porte correspondant à un angle a supérieur à 90° par rapport à l'axe moteur. Les profils ou découpes des éléments interne 11 et externe 9 de porte sont également adaptés à cette configuration et notamment les profils amont de porte adoptés facilitent l'écoulement.

Le fonctionnement de l'inverseur de poussée qui vient d'être décrit en référence aux figures 7 et 8, selon un deuxième mode de réalisation de l'invention est similaire à celui qui a été précédemment décrit pour le premier mode de réalisation en référence aux figures 2 à 5. On notera qu'une partie du flux secondaire symbolisé par la flèche 32 sur la figure 8 est dévié vers l'aval, cette partie déviée étant celle qui aurait risqué d'interférer avec une paroi ou de créer une surpression parasite, les effets dommageables étant ainsi éliminés.

En outre, une section d'éjection du flux est conservée dans des conditions voisines de celles qui sont obtenues par les inverseurs de poussée à portes de type connu.

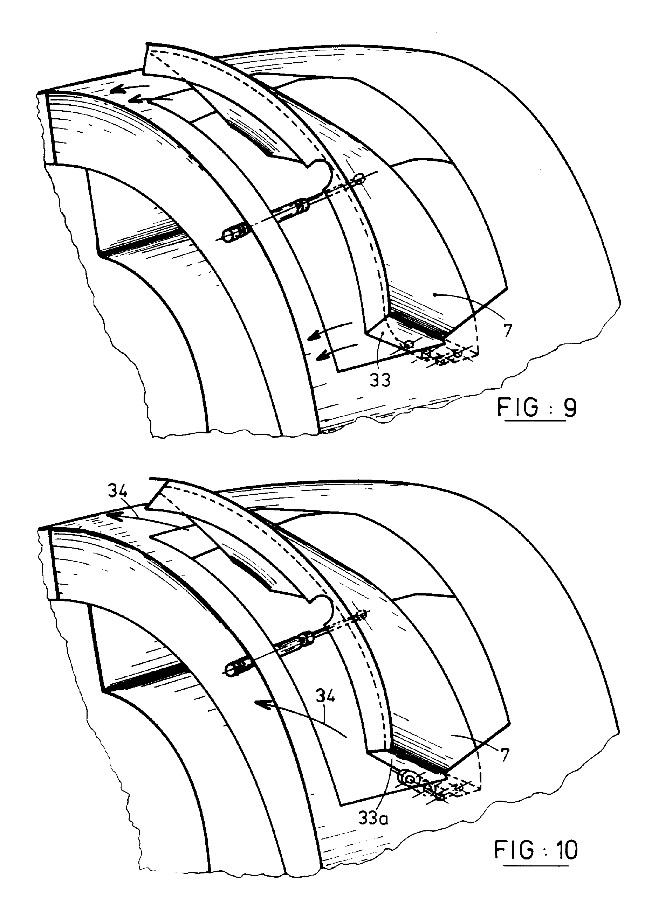

Des aménagements complémentaires peuvent en outre être apportés à l'inverseur de poussée conforme à l'invention de manière à améliorer le pilotage des nappes du flux inversé lors du fonctionnement en inversion de poussée. Les variantes de réalisation représentées sur les figures 9 à 12 donnent des exemples de ces améliorations obtenues grâce à l'adaptation de déflecteurs sur des portes à grand angle d'ouverture du type décrit ci-dessus en référence aux figures 7 et 8. La figure 9 montre ainsi une porte 7 équipée d'un déflecteur frontal 13 et de déflecteurs latéraux 33 de manière à dévier le flux inversé vers l'amont suivant une direction parallèle à l'axe moteur ou axe du canal annulaire secondaire de circulation du flux.

La figure 10 montre une porte 7 d'inverseur sur laquelle les déflecteurs latéraux 33a sont inclinés par rapport à la direction radiale de manière à dévier le flux inversé vers l'amont suivant une direction oblique par rapport audit axe de moteur, comme indiqué par les flèches 34.

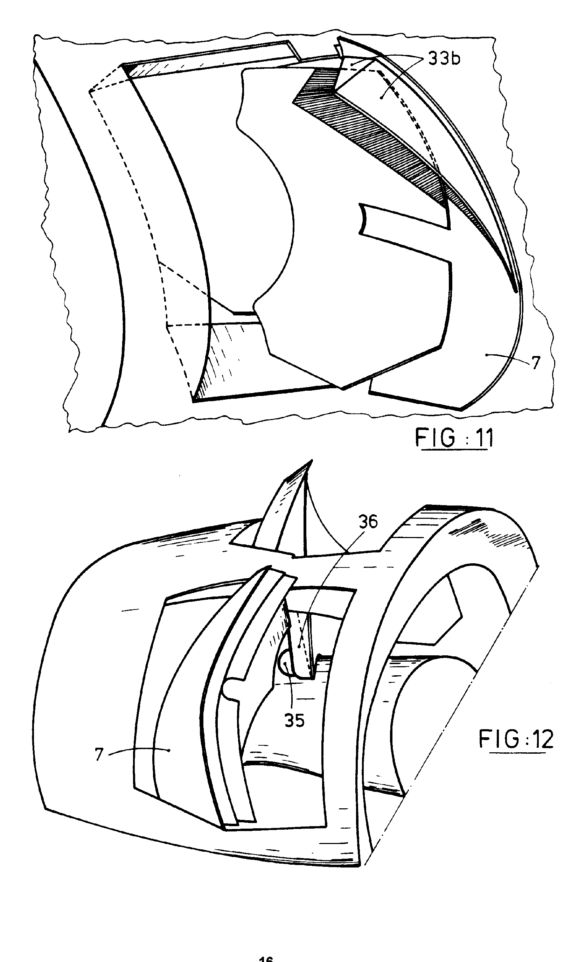

La figure 11 montre une porte 7 équipée d'un ensemble de déflecteurs frontal 13 et latéraux 33b dont la découpe et le vrillage permettent d'orienter une partie du flux inversé suivant une direction choisie, évitant toute interférence avec un obstacle déterminé tel qu'un panneau de dérive de l'avion.

Dans le cas envisagé ci-dessus où les portes d'un même inverseur peuvent avoir des angles différents d'ouverture en position d'inversion de poussée, des triangles de fuite repérés en 35 sur la figure 12 peuvent apparaître. Un réglage des fuites vers l'aval dans cette zone 35 peut être obtenu au moyen de l'adjonction d'un déflecteur aval 36 à surface et contour appropriés, monté sur l'élément interne 11 de la porte 7.

Par ailleurs, afin d'obtenir la meilleure adaptation aux applications envisagées, un inverseur de poussée conforme à l'invention et comportant plusieurs portes, notamment trois ou quatre, comme noté précédemment, peut comporter une ou deux portes réalisées conformément au deuxième mode de réalisation de l'invention décrit en référence aux figures 7 et 8 et présentant en position d'inversion de poussée un grand angle d'ouverture et les autres portes réalisées selon le premier mode de réalisation décrit en référence aux figures 2 à 6.

**Revendications**

1. Inverseur de poussée de turboréacteur à double flux comportant des portes pivotantes (7) susceptibles, en position fermée, de s'intégrer dans la paroi extérieure du canal annulaire du flux secondaire et, en position ouverte, de dévier le flux secondaire, dans lequel chaque porte pivotante (7) est constituée au moins d'un élément externe (9) muni au moins d'un déflecteur frontal (13) et raccordé à ses extrémités, en position de poussée directe, à la paroi externe fixe de l'inverseur et d'un élément interne (11) constituant un obstacle au flux secondaire en position d'inversion de poussée et raccordé à ses extrémités, en position de poussée directe, à la paroi interne fixe de l'inverseur, les deux éléments interne (11) et externe (9) étant mobiles l'un par rapport à l'autre et reliés par au moins une bielle (24) et l'élément interne (11) étant susceptible de pivoter autour d'un pivot principal fixe (28) porté par la structure fixe de l'inverseur
caractérisé en ce que l'élément externe (9) est susceptible de pivoter autour d'un pivot secondaire (31) qui est porté par l'élément interne (11) et en ce que les déplacements de la porte (7) sont obtenus au moyen d'un vérin (7a) porté par la structure fixe d'inverseur et dont la tige (20) est solidaire d'une articulation (21) portée directement par ledit élément interne (11).

2. Inverseur de poussée de turboréacteur selon la revendication 1 dans lequel ledit pivot principal fixe (28) est situé sur la structure fixe de l'inverseur à un emplacement tel que, à l'ouverture de la porte (7), les poussées du flux s'exerçant sur ladite porte (7) sont équilibrées et leur résultante passe par ledit axe de pivot principal (28).

3. Inverseur de poussée de turboréacteur selon l'une des revendications 1 ou 2 dans lequel la longueur du vérin (7a), la longueur de la bielle (24) et la position des articulations (23,25) de ladite bielle (24) sont déterminées de manière à obtenir un angle a d'ouverture de l'élément interne (11) de porte par rapport à l'axe du turboréacteur supérieur à 90°, en position d'inversion de poussée.

4. Inverseur de poussée de turboréacteur selon la revendication 3 dans lequel seules certaines des portes (7) dudit inverseur ont une caractéristique de grande ouverture décrite par la revendication 3.

5. Inverseur de poussée de turboréacteur selon l'une des revendications 3 ou 4 dans lequel la porte (7) à grand angle d'ouverture est équipée en plus du déflecteur frontal (13), de déflecteur latéraux (33) orientés parallèlement à l'axe du turboréacteur.

6. Inverseur de poussée de turboréacteur selon l'une des revendications 3 ou 4 dans lequel la porte (7) à grand angle d'ouverture est équipée de déflecteurs latéraux (33a) inclinés par rapport à la direction radiale.

7. Inverseur de poussée de turboréacteur selon l'une des revendications 3 ou 4 dans lequel la porte (7) à grand angle d'ouverture est équipée d'un ensemble de déflecteurs frontal (13) et latéraux (33b) dont la découpe et le vrillage permettent d'orienter une partie du flux inversé selon une direction choisie.

8. Inverseur de poussée de turboréacteur selon la revendication 4 dans lequel un déflecteur aval (36) monté sur l'élément interne (11) de porte permet un réglage des fuites vers l'aval apparaissant dans un triangle de fuite (35) formé entre deux portes (7) à angles d'ouverture différents.

**Patentansprüche**

1. Schubumkehrvorrichtung für ein Zweistrom-Turbostrahltriebwerk mit Schwenkklappen (7), die sich in geschlossener Position in die äußere Wandung des ringförmigen Kanals des Sekundärstrahl einfügen und in geöffneter Position den Sekundärstrahl umlenken können, wobei jede Schwenkklappe (7) aus wenigstens einem äußeren Element (9), das mit wenigstens einem vorderen Deflektor (13) ausgestattet und in der Direktschubposition mit seinen Enden an die äußere feste Wand der Schubumkehrvorrichtung anschließt, sowie aus einem inneren Element (11) besteht, das in der Schubumkehrposition ein Hindernis für den Sekundärstrahl bildet und in der Direktschubposition mit seinen Enden an die innere feste Wand der Schubumkehrvorrichtung anschließt, wobei das innere (11) und das äußere (9) Element relativ zueinander bewegbar und über wenigstens eine Triebstange (24) miteinander verbunden sind, und wobei das innere Element (11) um einen von der festen Struktur der Schubumkehrvorrichtung getragenen festen Hauptgelenkzapfen (28) verschwenkbar ist, **dadurch gekennzeichnet,** daß das äußere Element (9) um einen von dem inneren Element (11) getragenen sekundären Gelenkzapfen (31) verschwenkbar ist, und daß die Bewegungen der Schwenkklappe (7) durch einen von der festen Struktur der Schubumkehrvorrichtung getragenen Antriebszylinder (7a) gesteuert werden, dessen Kolbenstange (20) mit einem Gelenk (21) fest verbunden ist, das direkt von dem inneren Element (11) getragen ist.

2. Schubumkehrvorrichtung für ein Strahltriebwerk nach Anspruch 1, bei der der feste Hauptgelenkzapfen (28) an der festen Struktur der Schubumkehrvorrichtung an einer solchen Stelle angeordnet ist, daß die bei Öffnung der Schwenkklappe (7) auf die Schwenkklappe (7) einwirkenden Schubkräfte des Strahls im Gleichgewicht sind und ihre Resultierende durch die Achse des Hauptgelenkzapfens (28) verläuft.

3. Schubumkehrvorrichtung für ein Strahltriebwerk nach einem der Ansprüche 1 oder 2, bei der die Länge des Antriebszylinders (7a), die Länge der Triebstange (24) und die Position der Gelenke (23, 25) der Triebstange (24) so festgelegt sind, daß der Öffnungswinkel a des inneren Elements (11) der Schwenkklappe relativ zu der Achse des Strahltriebwerks in Schubumkehrposition größer als 90° ist.

4. Schubumkehrvonichtung für ein Strahltriebwerk nach Anspruch 3, bei der nur einige der Schwenkklappen (7) der Schubumkehrvorrichtung das in Anspruch 3 beschriebene Merkmal großer Öffnungsweite haben.

5. Schubumkehrvorrichtung für ein Strahltriebwerk nach einem der Ansprüche 3 oder 4, bei der die Schwenkklappe (7) mit großem Öffnungswinkel zusätzlich zu dem vorderen Deflektor ( 13) seitliche Deflektoren (33) besitzt, die parallel zur Achse des Strahltriebwerks ausgerichtet sind.

6. Schubumkehrvorrichtung für ein Strahltriebwerk nach einem der Ansprüche 3 oder 4, bei der die Schwenkklappe (7) mit großem Öffnungswinkel mit seitliche Deflektoren (33a) ausgestattet ist, die gegenüber der radialen Richtung geneigt sind.

7. Schubumkehrvorrichtung für ein Strahltriebwerk nach einem der Ansprüche 3 oder 4, bei der die Schwenkklappe (7) mit großem Öffnungswinkel mit einer Gruppe von vorderen (13) und seitlichen (33b) Deflektoren ausgestattet ist, deren Zuschnitt und Verwindung es ermöglichen, einen Teil des umgekehrten Strahls in eine ausgewählte Richtung zu lenken.

8. Schubumkehrvorrichtung für ein Strahltriebwerk nach Anspruch 4, bei der ein an dem inneren Element (11) der Schwenkklappe montierter stromabwärtiger Deflektor (36) eine Regelung der Leckströme in stromabwärtiger Richtung ermöglicht, die in einem zwischen zwei Schwenkklappen (7) mit unterschiedlichen Öffnungswinkeln gebildeten Leckdreieck (35) auftreten.

**Claims**

1. Bypass jet engine thrust reverser comprising pivoting doors (7) able, in closed position, to be integrated into the exterior wall of the annular channel of the secondary flow and, in open position, to divert the secondary flow, in which thrust reverser each pivoting door (7) is constituted by at least one external element (9) equipped at least with one frontal deflector (13) and connected at its extremities, in direct thrust position, to the external fixed wall of the reverser, and by an internal element (11) constituting an obstacle to the secondary flow in thrust reversal position and connected at its extremities, in direct thrust position, to the internal fixed wall of the reverser, the two internal (11) and external (9) elements being movable with respect to one another and linked together by at least one connecting rod (24) and the internal element (11) being able to pivot around a fixed main pivot (28) carried by the fixed structure of the reverser, characterired in that the external element (9) is able to pivot around a secondary pivot (31) which is carried by the internal element (11) and in that the displacements of the door (7) are obtained by means of a jack (7a) which is carried by the fixed structure of the reverser and whore rod (20) is solidly attached to an articulation (21) carried directly by the raid internal element (11).

2. Jet engine thrust reverser according to Claim 1 in which the raid fixed main pivot (28) is situated on the fixed structure of the reverser at a rite such that, when the door (7) is opened, the thrust of the flow exerted on the raid door (7) is balanced and its resultant passes through the raid main pivot axis (28).

3. Jet engine thrust reverser according to one of Claims 1 or 2 in which the length of the jack (7a), the length of the connecting rod (24) and the position of the articulations (23, 25) of the said connecting rod (24) are determined in such a way as to obtain an angle of opening a of the internal door element (11) greater than 90° with respect to the axis of the jet engine, in thrust reversal position.

4. Jet engine thrust reverser according to Claim 3 in which only some of the doors (7) of the said reverser have a wide opening characteristic described by Claim 3.

5. Jet engine thrust reverser according to one of Claims 3 or 4 in which the door (7) with a wide angle of opening is additionally equipped with the frontal deflector (13) and with lateral deflectors (33) oriented parallel to the axis of the jet engine.

6. Jet engine thrust reverser according to one of Claims 3 or 4 in which the door (7) with a wide angle of opening is equipped with lateral deflectors (33a) inclined with respect to the radial direction.

7. Jet engine thrust reverser according to one of Claims 3 or 4 in which the door (7) with a wide angle of opening is equipped with a set of frontal (13) and lateral (33b) deflectors whore cut-out profile and twirted shape enable part of the reversed flow to be oriented along a chosen direction.

8. Jet engine thrust reverser according to Claim 4 in which a downstream deflector (36) mounted on the internal door element (11) permits adjustment of the leaks in the downstream direction appearing in a leak triangle (35) formed between two doors (7) with different angles of opening.

FIG:1

FIG : 2

FIG : 3

FIG : 4

FIG : 5

FIG : 6

FIG: 7

FIG:8

FIG : 9

FIG : 10

FIG : 11

FIG : 12